# EUROPEAN PATENT SPECIFICATION

(11) **EP 1 630 033 B1**
(45) Date of publication and mention of the grant of the patent: **13.06.2012**
(21) Application number: 05107885.5
(22) Date of filing: 29.08.2005
(51) Int. Cl.: B60N 2/20, B60N 2/28, B60R 7/04, B60R 11/00, B60R 11/02

(54) **Vehicle seat**
Fahrzeugsitz
Siège de véhicule

(30) Priority: 30.08.2004 EP 04020530
(43) Date of publication of application: 01.03.2006
(73) Proprietor: Volvo Car Corporation, 405 31 Göteborg (SE)
(72) Inventor: Alexandersson, Peter, 434 97 Kungsbacka (SE); Södling, Urban, 430 93 Hälsö (SE)
(74) Representative: Bergquist, Kjell Gunnar

(56) References cited:
- DE-A1- 3 704 972
- DE-A1- 10 000 597
- FR-A- 2 575 711

## Description

### TECHNICAL FIELD:

The present invention relates to a vehicle seat comprising a seat back component.

### BACKGROUND ART:

In modem vehicles, for example cars, there is a need for versatile storing and/or attachment arrangements for example for child seats, load carriers and office kits.

A child seat is normally strapped to the front passenger seat by means of attachment straps and also by means of an existing three-point safety belt arranged in said front passenger seat. Sometimes it may be desirable to detach the child seat, for example if the child is sleeping in the seat after a ride in the vehicle, or if the child seat is to be moved and mounted in a rear seat in the vehicle in question. This detaching and attaching is cumbersome and time-consuming, and may for example inflict unnecessary wear on the seat belt.

Regarding other types of equipment, such as load carriers and office kits, these can be stored in either the luggage compartment of the vehicle or rested on one of the seats, i.e. being loose in the vehicle. If stored in the luggage compartment, these items are normally lying loose there, and in the event of a sudden acceleration or deceleration, for example in the event of a collision or a sharp turn at a high speed, this equipment may be thrown at other items in the luggage compartment, or at any of the surfaces which form the walls, roof and floor in the luggage compartment. The other items in the luggage compartment and/or the equipment in question may then be damaged. Also, the equipment in question may attract dirt and oil from other things in the luggage compartment, such as oil cans, lift jacks etc. It is even more conceivable that these items are stored on one of the seats, being loose in the vehicle. In the event of a sudden acceleration or deceleration, for example when a collision occurs, or in the event of a sharp turn at a high speed, this equipment may be thrown at objects in the passenger compartment, or at any of the surfaces forming the walls, windows, roof and floor in the passenger compartment. The other items in the passenger compartment and/or the equipment in question may then be damaged. Even worse, the equipment in question may be thrown at persons travelling in the vehicle, causing injuries.

Furthermore, today's child safety seats are constituted by separately sold products which are mounted into a car's seats by means of suitable fastening elements. Such fastening elements can be constituted by existing safety belts, separate straps or other locking devices. These mounting methods are normally very strong and are adapted to force the child seat into a predetermined fixed position.

Although today's fastening means for child seats work in a satisfactory manner, they do not always provide sufficient possibilities for adjustments for obtaining a high degree of comfort, and are not always sufficiently flexible as regards their positioning. In this regard, it should be noted that small children are not always happy to sit in just one position during a car ride. During driving, a child can both be in a high spirit or very sleepy. It is very important to meet these different moods so that a good temper of the child can be maintained. Otherwise, this may result in stressful situations, in particular for the driver of the car. This may in turn lead to unsafe driving.

A safety child seat which is secured to the back of a vehicle seat is disclosed in the patent document DE 3704972. The child seat is secured by means of a safety belt and a second belt which is secured at the seat's head rest holder rods. However, this device is neither versatile, nor easily manipulated. Furthermore, the patent document FR 2575711, which is considered to be the closest prior art, discloses a vehicle seat with a seat back component and being adapted for mounting of a child seat on the rear side of said seat back component, according to the preamble of claim 1 and a child seat arranged for being mounted in a detachable manner in the seat back component of the vehicle seat as described in the preamble of claim 7. There is thus a need for storing equipment such as child seats, load carriers and office kits in a vehicle in such a way that the equipment is safely attached in the vehicle at the same time as it is easily detachable and attachable. A particular aspect of this need is the desire to obtain more flexible and comfortable positioning of a child seat.

### DISCLOSURE OF INVENTION:

It is an object of the present invention to solve the above-mentioned problems and to provide means for storing equipment such as child seats, load carriers and office kits in a vehicle in such a way that the equipment is safely attached in the vehicle at the same time as it is easily detachable and attachable and in particular for providing increased comfort and flexibility during use of a child seat.

This object is solved by vehicle seat according to claim 1.

The object is also solved by means of a child seat according to claim 7.

An important advantage of the invention is that a child seat can be mounted at a chosen height and with a chosen angle of inclination of the seat back. This results in increased comfort due to the flexibility when mounting the child seat. It can be noted that the comfort adjustments can be made by using the car's existing seat adjustments together with a child seat mounting procedure which is adjustable in line with the positioning of the seat back.

The child in the child seat can consequently be given a seating comfort that fits with the child's mood. This can contribute to making a car journey more calm, nice and safe for both the children and other occupants of the car.

A number of additional advantages can be obtained by means of the present invention. In particular, a versatile means for storing and securing equipment in a vehicle is provided. Also, the invention can be used for easy detaching an attaching of the equipment in question. For example, a child seat may be detachably fastened to the seat back in a simple, yet comfortable and secure manner.

Furthermore, when the equipment is in the form of a child seat, a collision force dampening function can be provided due to the fact that it can be provided with fastening tracks which can be arranged with energy-absorbing means which allows the child seat to slide along the tracks in a manner so that energy is simultaneously absorbed.

Suitably, the positioning of the child seat and the choice of angle of inclination of the seat back is adapted to the length or weight of the child riding in the child seat in question. Other factors can also be taken into account, for example the degree of energy absorption which is needed by means of the above-mentioned fastening tracks.

### BRIEF DESCRIPTION OF DRAWINGS:

The invention will now be described more in detail with reference to the attached drawings, wherein:
- Fig. 1: shows a vehicle seat according to the present invention;
- Fig. 2: shows a vehicle seat according to the present invention with a child seat attached to the seat back, in a first position;
- Fig. 3: shows a vehicle seat according to the present invention with a child seat attached to the seat back, in a second position; and
- Figs. 4a-c: show the manner in which the invention can be used for mounting a child seat.

### PREFERRED EMBODIMENT:

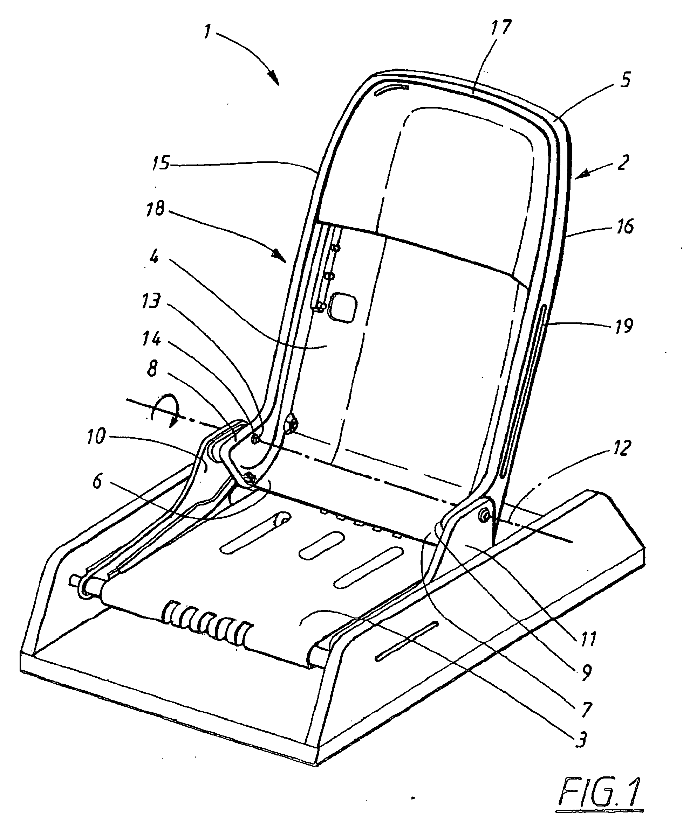

With reference to Figure 1, the basic structure of a vehicle seat 1 in accordance with a preferred embodiment of the invention is shown. In Fig. 1, no upholstery or support components of the vehicle seat 1 are shown. The vehicle seat 1 comprises generally a seat back component 2 and a seat bottom component 3.

The seat back component 2 has a seat back body plate 4 which is generally formed in a manner so as to fit comfortably to the back of an occupant sitting in the seat 1. Along the sides of the seat back body plate 4, a frame component in the form of a stabilizer 5 is arranged. The stabilizer 5 is generally shaped with an inverted U-shaped configuration, more precisely in the form of a a peripheral frame that extends from a first bottom corner 6 of the seat back body plate 4 to a second bottom corner 7 of the seat back body plate 4, thus having a first end portion 8 and a second end portion 9.

The seat bottom component 3 is formed with first side bracket 10 and a second side bracket 11. The first side bracket 10 is positioned next to the above-mentioned first end portion 8, whereas the second side bracket 11 is positioned next to the second end portion 9. Furthermore, the seat back 2 is arranged so as to be foldable, or pivotable, about an axis 12 which extends generally perpendicularly with respect to the longitudinal direction of the vehicle in question. According to the embodiment, the folding of the seat back 2 can be obtained by means of a short pin or shaft 13 in the first side bracket 11 which cooperates with a corresponding hole 14 in the first end portion 8, and a by means of a further pin or shaft (not visible in Fig. 1) in the second side bracket 12 which cooperates with a corresponding hole (not visible in Fig. 1) in the second end portion 9.

The stabilizer 5 has three shanks, i.e. a first shank 15, a second shank 16 and a third shank 17, where each shank 15, 16, 17 runs along a side in the U-shaped configuration. The first shank 15 and the second shank 16 are at least partly essentially parallel to each other, and the third shank 17 is at least partly essentially perpendicular to the first shank 15 and the second shank 16 shank, and joins the first shank 15 and the second shank 16. The shanks 15, 16, 17 are preferably, as evident from Figure 1, made in one piece, forming the stabilizer 5.

At the first shank 15 and the second shank 16, respectively, two tracks 18, 19 are provided, more precisely in the form of a first guide track 18 and a second guide track 19. Each guide track 18, 19 is preferably in the form of a groove which is arranged in a recessed manner at a surface of the respective shank 15, 16 that faces away from the seat back body plate 3. This means that the guide tracks 18, 19 are provided on the outside of each shank 15, 16 and consequently face each longitudinal side of the vehicle in question. However, alternatively (and not shown in the drawings), the guide tracks can in principle also be arranged along the shanks 15, 16 so that they face the forward or rearward direction of the vehicle. Each guide track 18, 19 extends along the main direction of the stabilizer 5, i.e. along the generally vertical extension of the corresponding shanks 15, 16.

It should be noted that the first guide track 18 is obscured in Figure 1, but is similar to the second guide track 19, both in appearance and position.

The guide tracks 18, 19 are of sufficient length for the purposes to be described below. Preferably, they extend along a length that approximately corresponds to half the height of the seat back component 2, starting at a certain distance from the respective end 8, 9 of the stabilizer 5. However, it should be noted that the invention is not limited to any particular length of the guide tracks 18, 19.

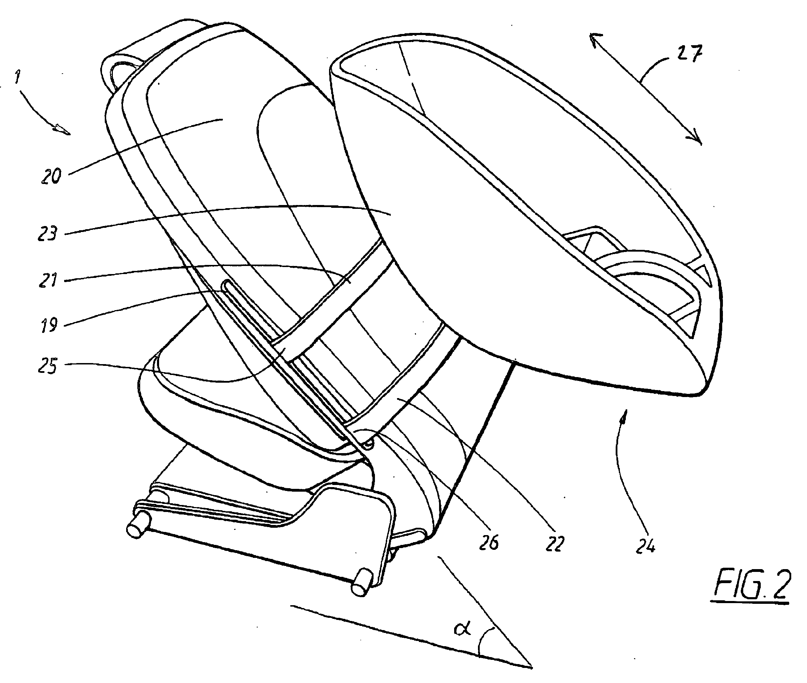

With reference to Figure 2, the seat 1 is now shown complete with upholstery and support material, comprising a complete seat back 20. In Figure 2, a central part of a first fastening rib 21 and a second fastening rib 22 is attached to the back 23 of a child seat 24 in such a way that the ribs 21, 22 extend across said back 23 of the child seat 24. Although not shown in detail in Figure 2, the ribs 21, 22 can be provided with bent end portions, or with hooks, catches or other suitable projections, which consequently cooperate with the guide tracks 18, 19 in the seat back 20. The ribs are preferably made from relatively stiff plastic material, but can also be made of other materials. Consequently, the ribs 21, 22 define fastening means in the form of relatively thin strips which extend across the rear side of the seat back 20 when mounted, i.e. the ribs 21, 22 are mounted to the rear side of the child seat 24 and are also designed so as to extend to the sides of the seat back 20 and cooperate with the above-mentioned guide tracks 18, 19 on the sides of the seat back 20. In this manner, the child seat 24 can be mounted to the seat back 20 in a secure manner. Preferably, as will be shown below, the ribs 21, 22 are suitably mounted in the guide tracks 18, 19 by means of a snap-in attachment.

In Fig. 2, the vehicle seat 1 is shown with such a perspective view that only the second guide track 19 with those rib edges 25, 26 that co-operate with this guide track 19 are shown. Of course, the same arrangement is provided at the other obscured side with the first guide track 18.

As is evident from Figure 2, the child seat 24 is attached to the complete seat back 20 by means of the ribs 21, 22 where the end parts 25, 26 of each rib 21, 22 engage the respective guide track 18, 19. In order to support the child seat 24 in an optimum manner, the seat back 20 may be bent slightly forward, as shown on Figure 2, if it is possible.

Furthermore, as indicated in Figure 2, the child seat 24 is arranged to be adjustable along a direction which is generally in line with the longitudinal direction of the seat back 20. This direction is schematically indicated by means of an arrow 27 in Fig. 2. According to the embodiment, the child seat 24 with its fastening ribs 21, 22 is adapted to be displaced in either direction as shown by the arrrow 27, i.e. along the longititudinal direction of the seat back 20.

Also, as indicated in Figure 2, the seat back 20 can be inclined so as to assume a particular angle α with reference to a horizontal plane, i.e. the direction along which the seat bottom 3 (cf. Fig. 1) extends. In particular, the seat back 20 may be arranged to be adjusted continuously or stepwise, in order to choose an angle α in which the seat back 20 is positioned in a suitable manner.

It is an important feature of the invention that the child seat 24 can be positioned in a position along the direction indicated by the arrow 27 and with a certain angle α. This results in an increased degree of comfort for the child in the child seat 24, and also for other occupants of the vehicle in question.

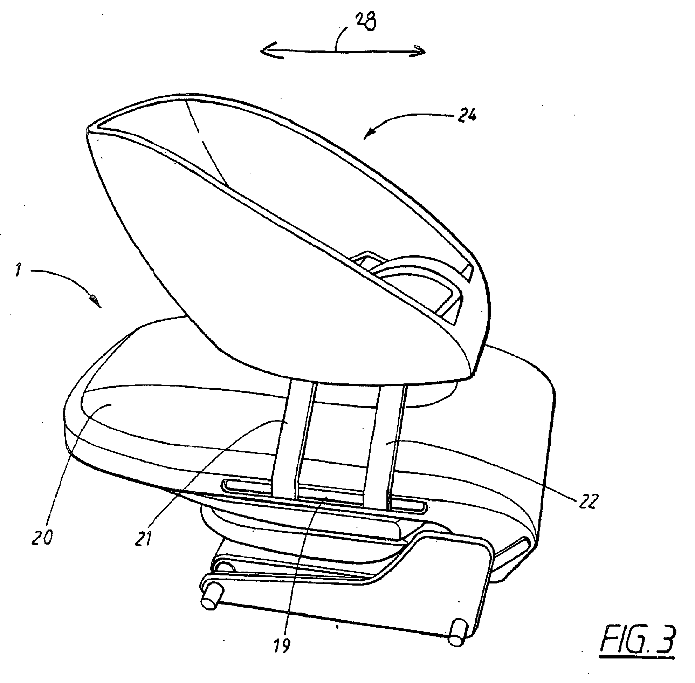

With reference to Figure 3, a flexible seat 1 where the seat back 20 is folded forward to a large extent is shown. Here, the child seat 24 is arranged on top of the bent seat back 20. This is suitable both for an upright position and a sleeping position for very small babies. In this position, the ribs 21, 22 may slide, preferably in a suitably dampened and energy-absorbing manner, in the guide tracks 18, 19 if a sudden deceleration such as a collision should occur. In this way, the seat back guide tracks 18, 19 are used to absorb energy during a collision, relieving the child of some of the impact forces. This is an advantage which improves the safety for an occupant travelling in the child seat.

As indicated in Figure 3, the child seat 24 with its fastening ribs 21, 22, is arranged to be positioned in a suitable position along the seat back 20, i.e. along its longitudinal direction. Such a displacement is indicated by means of a further arrow 28. Consequently, the child seat 24 shown in Figure 3 is adapted to be displaced along the seat back 20 in a generally horizontal direction. This also results in an increased degree of comfort and flexibility for the child in the child seat 24 and for other vehicle occupants. In such a horizontal position, the angle α of the seat back 20 is consequently zero, or close to zero.

Suitably, the position of the child seat 24 and the choice of the angle a of inclination of the seat back 20 is adapted to the length or weight of the child occupying the child seat 24. In other words, the length and/or weight of the child may correspond to a predetermined position (along arrow 27, alternatively arrow 28) and a predetermined angle α. Other factors can also be taken into account when determining position of the child seat 24 and the choice of the angle α, for example the degree of energy absorption which is required. Such energy absorption is provided by means of the above-mentioned fastening tracks 18, 19. This means that a collision force dampening function can be provided due to the fact that said tracks 18, 19 can be arranged with energy-absorbing means which allows the child seat to slide along the tracks in a manner so that energy is simultaneously absorbed in the event of a collision.

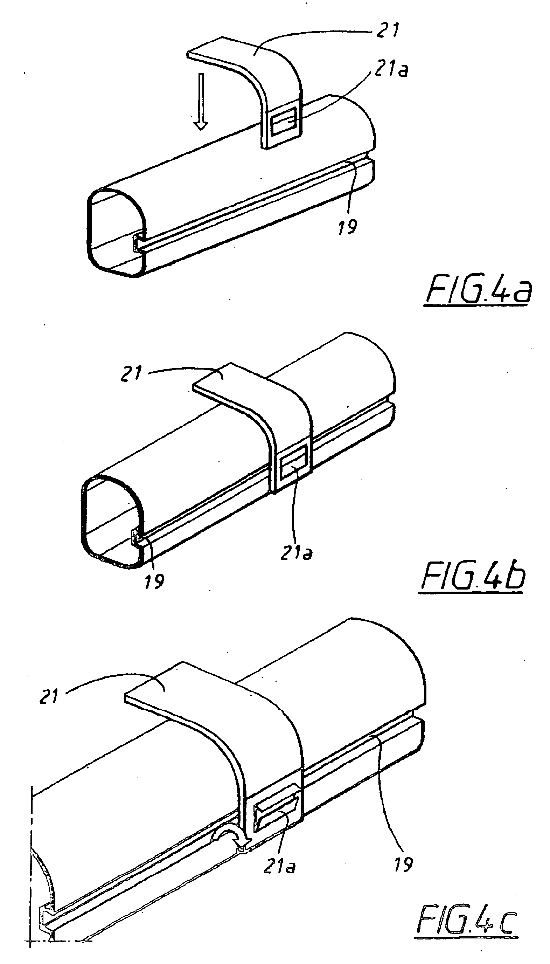

With reference to Figs. 4a-c, the mounting of a fastening rib 21 in a guide track 19 is shown in detail. As indicated in Figs. 4a and 4b, the rib 21 is pushed into place from the rear side of the seat back (not shown in Figs. 4a-c). The bent end section of the rib 21 comprises a snap-in member 21 a, preferably in the form of a spring-biased head or lip which snaps into the guide track 19 when mounted in a manner as shown in particular in Fig. 4b. Preferably, the snap-in member 21a is arranged so that, when mounted, a certain portion thereof extends out of the bent end section 21 (as shown in Fig. 4c), which means that it can be unlocked by pushing on said snap-in member 21a. Preferably, each fastening rib comprises two such snap-in member, i.e. one in each end, for mounting in both guide tracks 18, 19 (cf. Figs. 1-3). This means that when the invention is used for mounting a child seat, said child seat can only be unlocked by simultaneously pushing on both snap-in members. This means that there is little or no risk for unlocking the child seat by accident. Also, the snap-in member 21a can be arranged to cooperate with the guide track 19 so that energy is absorbed during sliding of the rib 21 along the rear of the seat back.

The child seat 24 is easily detachable and attachable, which is an advantage if the child seat has to be brought away from the vehicle, for example if the child is sleeping.

The child seat 24 may be substituted for any other form of equipment that may be fastened to ribs as shown in the embodiment above. This equipment comprises load carriers and office kits (not shown), which then is safely secured in the vehicle.

The invention is not limited to what has been disclosed in the description, but may vary within the scope of the appended claims.

Also, the tracks according to the invention can be designed in the form of recessed grooves (as shown in the appended drawings) or, alternatively, in the form of other types of tracks such as bars, trails, mounting racks, rails or other suitable components for fastening of further components generally on the rear side of the vehicle seat in question, and for displacement of said components along the rear side of the seat back. The tracks may extend either along a generally straight line, or may be arranged as curved lines which are positioned in a suitable manner on the vehicle seat in question. Further, the fastening ribs 21, 22 may have different shapes and may be connected to the guide tracks in many ways, conceivable for the skilled person. It may also be sufficient to use one or several fastening ribs.

## Claims

1. Vehicle seat comprising a seat back component (2) which is adapted for mounting of a child seat (24) so as to be positioned generally on the rear side of said seat back component (2) in a displaceable manner, at a predetermined position along the seat back component (2) and with a predetermined angle (α) of inclination of said seat back component (2), **characterized in that** the vehicle seat has a frame component (5) extending at least partly along the sides of said seat back component (2) and wherein a first track (18) and a second track (19) are arranged along each side of the frame component (5), said tracks (18, 19) being adapted for mounting of the child seat (24), and each of said tracks (18, 19) are adapted to cooperate with at least one fastening rib (21, 22) being used for mounting of said child seat (24).

2. Vehicle seat according to claim 1, **characterized in that** the position of said child seat (24) along the seat back component (2) and said angle (α) is adapted in accordance with at least the length or weight of the child.

3. Vehicle seat according to claim 1 or 2, **characterized in that** the tracks (12, 13) extend along a length that approximately correspond to half the height of the seat back component (2).

4. Vehicle seat according to any of the preceding claim, **characterized in that** said frame component (5) extends in a generally inverted U-shaped configuration along the peripheral sides of said seat back component (2), with a first shank (15) and a second shank (16) which are generally vertical and parallel to each other, and which are joined by a third shank (17).

5. Vehicle seat according to any one of the preceding claims, **characterized in that** the tracks (18, 19) are arranged with energy-absorbing means allowing said ribs (21, 22) to slide in the tracks (18, 19) whereby energy is absorbed.

6. Vehicle seat according to any one of the preceding claims, **characterized in that** the child seat (24) is mounted by means of said at least one fastening rib (21, 22) cooperating with said tracks (18, 19), said fastening rib (21, 22) being arranged to be attached to the back (23) of said child seat (24), enabling the child seat (24) to be fastened to the seat back component (2) as the ends of each rib (21, 22) engage the respective track (18, 19).

7. Child seat (24) being arranged for mounting in a detachable manner in a vehicle seat (1), wherein said child seat (24) is adapted to be positioned generally on the rear side of a seat back component (2), in a displaceable manner, at a predetermined position along the seat back component (2) and with a predetermined angle (α) of inclination of said seat back component (2), **characterized in that** said child seat (24) being provided with fastening ribs (21, 22) adapted for cooperating with tracks (18, 19) arranged along each side of said seat back component (2).

8. Child seat (24) according to claim 7, **characterized in that** said fastening means (21, 22) comprises spring-biased snap-in components (21 a) for mounting into said tracks (18, 19).

## Patentansprüche

1. Fahrzeugsitz mit einer Sitzlehnkomponente (2), die so zum Anbringen eines Kindersitzes (24) eingerichtet ist, um im Wesentlichen auf der Rückseite der Sitzlehnkomponente (2) in einer abnehmbaren Weise in einer festgelegten Position entlang der Sitzlehnkomponente (2) angeordnet zu sein und mit einem festgelegten Neigungswinkel (α) der Sitzlehnkomponente (2), **dadurch gekennzeichnet, dass** der Fahrzeugsitz eine Rahmenkomponente (5) aufweist, die sich zumindest teilweise entlang der Seitender Sitzlehnkomponente (2) erstreckt und wobei eine erste Bahn (18) und eine zweite Bahn (19) entlang jeder Seite der Rahmenkomponente (5) angeordnet sind, die Bahnen (18,19) zum Anbringen des Kindersitzes (24) eingerichtet sind und jede der Bahnen (18,19) eingerichtet ist, um mit mindestens einer Befestigungslamelle (21,22), die zum Anbringen des Kindersitzes (24) verwendet wird, zusammenzuwirken.

2. Fahrzeugsitz gemäß Anspruch 1, **dadurch gekennzeichnet, dass** die Position des Kindersitzes (24) entlang der Sitzlehnkomponente (2) und der Winkel (α) im Zusammenhang mit zumindest der Größe oder des Gewichts des Kindes angepasstist.

3. Fahrzeugsitz gemäß Anspruch 1 oder 2, **dadurch gekennzeichnet, dass** sich die Bahnen (12,13) entlang einer Länge erstrecken, die näherungsweise der halben Höhe der Sitzlehnkomponente (2) entspricht.

4. Fahrzeugsitz gemäß einem der vorstehenden Ansprüche, **dadurch gekennzeichnet, dass** die Rahmenkomponente (5) sich in einer im Wesentlichen umgekehrten U-förmigen Anordnung entlang der Außenseiten der Sitzlehnkomponente (2) erstreckt und zwar mit einer ersten Flanke (15) und einer zweiten Flanke (16), die im Wesentlichen vertikal und zueinander parallel sind und die durch eine dritte Flanke (17) verbunden sind.

5. Fahrzeugsitz gemäß einem der vorstehenden Ansprüche, **dadurch gekennzeichnet, dass** die Bahnen (18, 19) mit einem energieabsorbierenden Mittel eingerichtet sind, das den Lamellen (21,22) ermöglicht, in den Bahnen (18,19) zu gleiten, wodurch Energie absorbiert wird.

6. Fahrzeugsitz gemäß einem der vorstehenden Ansprüche, **dadurch gekennzeichnet, dass** der Kindersitz (24) mittels mindestens einer Befestigungslamelle (21,22) angebracht ist, die mit den Bahnen (18, 19) zusammenwirkt, wobei die Befestigungslamelle (21,22) eingerichtet ist, um an der Rückseite (23) des Kindersitzes (24) angebracht zu werdenund zu ermöglichen, dass der Kindersitz (24) an der Sitzlehnkomponente (2) befestigt wird, wenn die Enden jeder Lamelle (21,22) jeweils in die Bahn (18,19) eingreifen.

7. Kindersitz (24), der zum Anbringen in einer abnehmbaren Weise an einem Fahrzeugsitz (1) eingerichtet ist, wobei der Kindersitz (24) angepasst ist, um im Wesentlichen an der Rückseite der Sitzlehnkomponente (2) in einer abnehmbaren Weise, in einer festgelegten Position entlang der Sitzlehnkomponente (2) und in einem festgelegten Neigungswinkel (α) der Sitzlehnkomponente (2) angeordnet zu werden, **dadurch gekennzeichnet, dass** der Kindersitz (24) mit Befestigungslamellen (21,22) bereitgestellt ist, die zum Zusammenwirken mit Bahnen (18,19) angepasst sind, die entlang einer jeden Seite der Sitzlehnkomponente (2) angeordnet sind.

8. Kindersitz (24) gemäß Anspruch 7, **dadurch gekennzeichnet, dass** das Befestigungsmittel (21, 22) federgespannte Einschnappkomponenten (21a) zum Anbringenan die Bahnen (18,19) aufweist.

## Revendications

1. Siège de véhicule comprenant un composant de dossier de siège (2) qui est adapté pour permettre de monter un siège enfant (24) afin d'être positionné généralement sur le côté arrière dudit composant de dossier de siège (2) d'une manière déplaçable, dans une position prédéterminée le long du composant de dossier de siège (2) et avec un angle prédéterminé (α) d'inclinaison dudit composant de dossier de siège (2), **caractérisé en ce que** le siège de véhicule a un composant de châssis (5) s'étendant au moins partiellement le long des côtés dudit composant de dossier de siège (2) et dans lequel un premier rail (18) et un deuxième rail (19) sont agencés le long de chaque côté du composant de châssis (5), lesdits rails (18, 19) étant adaptés pour le montage du siège enfant (24), et chacun desdits rails (18, 19) est adapté pour coopérer avec au moins une nervure de fixation (21, 22) qui est utilisée pour le montage dudit siège enfant (24).

2. Siège de véhicule selon la revendication 1, **caractérisé en ce que** la position dudit siège enfant (24) le long du composant de dossier de siège (2) et dudit angle (α), est adaptée selon au moins la longueur ou le poids de l'enfant.

3. Siège de véhicule selon la revendication 1 ou 2, **caractérisé en ce que** les rails (12, 13) s'étendent le long d'une longueur qui correspond approximativement à la moitié de la hauteur du composant de dossier de siège (2).

4. Siège de véhicule selon l'une quelconque des revendications précédentes, **caractérisé en ce que** ledit composant de châssis (5) s'étend dans une configuration généralement en forme de U inversé le long des côtés périphériques dudit composant de dossier de siège (2), avec une première tige (15) et une deuxième tige (16) qui sont généralement verticales et parallèles entre elles, et qui sont assemblées par une troisième tige (17).

5. Siège de véhicule selon l'une quelconque des revendications précédentes, **caractérisé en ce que** les rails (18, 19) sont agencés avec des moyens d'absorption d'énergie permettant auxdites nervures (21, 22) de coulisser dans les rails (18, 19), moyennant quoi l'énergie est absorbée.

6. Siège de véhicule selon l'une quelconque des revendications précédentes, **caractérisé en ce que** le siège enfant (24) est monté au moyen de ladite au moins une nervure de fixation (21, 22) coopérant avec lesdits rails (18, 19), ladite nervure de fixation (21, 22) étant agencée pour être fixée au dossier (23) dudit siège enfant (24), permettant au siège enfant (24) d'être fixé au composant de dossier de siège (2) lorsque les extrémités de chaque nervure (21, 22) mettent en prise le rail (18, 19) respectif.

7. Siège enfant (24) qui est agencé pour être monté d'une manière détachable sur un siège de véhicule (1), dans lequel ledit siège enfant (24) est adapté pour être positionné généralement sur le côté arrière d'un composant de dossier de siège (2), d'une manière déplaçable, dans une position prédéterminée le long du composant de dossier de siège (2) et avec un angle (α) prédéterminé d'inclinaison dudit composant de dossier de siège (2), **caractérisé en ce que** ledit siège enfant (24) est doté de nervures de fixation (21, 22) adaptées pour coopérer avec des rails (18, 19) agencés le long de chaque côté dudit composant de dossier siège (2).

8. Siège enfant (24) selon la revendication 7, **caractérisé en ce que** lesdits moyens de fixation (21, 22) comprennent des composants d'encliquetage à ressort (21a) pour le montage dans lesdits rails (18, 19).
